(19) **Europäisches Patentamt European Patent Office Office européen des brevets**

(11) **EP 2 125 615 B1**

(12) **EUROPEAN PATENT SPECIFICATION**

(45) Date of publication and mention of the grant of the patent:
**05.06.2013 Bulletin 2013/23**

(51) Int Cl.:
*C01B 25/45* (2006.01)   *H01M 4/58* (2010.01)
*H01M 10/052* (2010.01)

(21) Application number: **08715388.8**

(22) Date of filing: **01.04.2008**

(86) International application number:
**PCT/CN2008/070656**

(87) International publication number:
**WO 2008/145034 (04.12.2008 Gazette 2008/49)**

(54) **METHOD FOR PREPARING LITHIUM IRON PHOSPHATE AS A POSITIVE ELECTRODE ACTIVE MATERIAL FOR A LITHIUM ION SECONDARY BATTERY**

VERFAHREN ZUR HERSTELLUNG VON LITHIUMEISENPHOSPHAT ALS AKTIVMASSE FÜR POSITIVE ELEKTRODEN FÜR EINE LITHIUMIONEN-SEKUNDÄRBATTERIE

PROCÉDÉ D'ÉLABORATION DE PHOSPHATE DE LITHIUM ET DE FER COMME MATÉRIAU ACTIF D'ANODE DE BATTERIE SECONDAIRE AUX IONS LITHIUM

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.05.2007   CN 200710103095**
**28.08.2007   CN 200710147590**
**26.11.2007   CN 200710187560**

(43) Date of publication of application:
**02.12.2009 Bulletin 2009/49**

(73) Proprietor: **Byd Company Limited**
**Shenzhen, Guangdong 518118 (CN)**

(72) Inventors:
• **CHEN, Xiaoyong**
**Guangdong 518118 (CN)**
• **XU, Chaqing**
**Guangdong 518118 (CN)**
• **JIA, Wenwen**
**Guangdong 518118 (CN)**

(74) Representative: **HOFFMANN EITLE**
**Patent- und Rechtsanwälte**
**Arabellastrasse 4**
**81925 München (DE)**

(56) References cited:
WO-A1-2005/051840     CN-A- 1 761 090
CN-A- 1 775 665        CN-A- 1 775 665
JP-A- 2002 015 735     JP-A- 2004 079 276
JP-A- 2005 108 681

• WANG G. ET AL.: 'Preparation and properties of LiFePO4/C composite materials with Fe2O3 as starting reactant' CHEMICAL JOURNAL OF CHINESE UNIVERSITIES vol. 28, no. 1, January 2007, pages 136 - 139, XP008116631

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention relates to a method for preparing a battery positive electrode active material, more specifically, to a method for preparing lithium iron phosphate as a positive electrode active material for a lithium ion secondary battery.

Background of the Invention

The lithium ion battery, as a chemical power source with high specific capacity, has already been widely used in various fields such as mobile communication, notebook computer, camcorder, camera, and portable device, and it is also the most preferred power source equipped for electric cars and space power sources intensively researched worldwide, as well the most preferred renewable energy. The research of the positive electrode active material for the lithium ion battery is focused on $LiFePO_4$, because compared with other positive electrode active materials for the lithium ion battery, $LiFePO_4$ has good electrochemical properties, stable charge-discharge flat potential plateau, and stable structure during charge-discharge process, and $LiFePO_4$ also has the advantage of non-toxicity, no pollution, good safety, applicability at a high temperature, and abundant raw material resources.

In prior art, to homogeneously mix various raw materials for $LiFePO_4$ preparation, the conventionally adopted preparation method comprises mixing a soluble lithium source, an iron source, and a phosphorus source in a liquid medium with a carbon source dissolved therein, and drying and calcining the mixture. For example, CN 1442917A discloses a method for preparing $LiFePO_4$ comprising the steps of: dissolving polyol or saccharide in distilled water, and adding a lithium source, an iron source, and a phosphorus source thereto; and intensively stirring the mixture, drying in inert atmosphere, and calcining in Ar or $N_2$ atmosphere to give carbon-coated $LiFePO_4$ composite conductive nanomaterial. It also in detailed discloses that: (1) the whole preparation is carried out in Ar or $N_2$ atmosphere, (2) the calcination temperature is 600-1,000 °C, (3) the reaction time is 0.5-24 hr, wherein the iron source is ferrous oxalate and/or ferrous hydroxide, the phosphorus source is one or more of $H_3PO_4$, $NH_4H_2PO_4$, $(NH_4)_2HPO_4$, and $(NH_4)_3PO_4$.

The obtained lithium iron phosphate ($LiFePO_4$) by the aforementioned method has large particle size, non-uniform particle size distribution, and high production cost. When it is used as positive electrode active material for a lithium ion secondary battery, the obtained battery has low initial discharge specific capacity, and poor high-current discharge performance and cycle performance.

In prior art, insoluble ferric phosphate also can be adopted as phosphorus source and iron source, for example, CN 1821062A discloses a method for preparing carbon-coated lithium iron phosphate, comprising: (1) weighing ferric phosphate, lithium acetate, and reductant, adding distilled water to dissolve the lithium acetate and the reductant, and stirring for 1-10 hr at 20-90 °C until evaporation to dryness to give lithium iron phosphate precursor; (2) treating the precursor at 300-800 °C for 0.5-5 hr in protection atmosphere to give lithium iron phosphate; and (3) weighing the lithium iron phosphate and carbon source, adding distilled water to dissolve the carbon source, heating while stirring until evaporation to dryness, treating at 500-800 °C for 0.5-5 hr in protection atmosphere to give carbon-coated lithium iron phosphate. As disclosed in that public literature, the battery prepared by using the obtained carbon-coated lithium iron phosphate can give initial discharge capacity up to 167 mAh/g, but the battery has poor large-current discharge performance and cycle performance.

WO 2005/051840 A1 relates to a method for producing a compound of formula $LiMPO_4$, in which M represents at least one metal of the first transition series, said method comprising the steps of: .

a) production of a precursor mixture containing at least one $Li^+$ source, at least one $M^{2+}$ source and at least one $PO_4^{3-}$ source in order to obtain a precipitate and produce a precursor suspension;
b) treatment of the precursor mixture and/or precursor suspension by dispersion or grinding, until the D90 value of the particles in the precursor suspension is less than 50 $\mu$m; and
c) extraction of $LiMPO_4$ from the precursor suspension obtained in step b), preferably by conversion under hydrothermal conditions.

JP 2004 079276 A relates to a positive electrode activator which is a compound having an olivine type crystal structure that is expressed by general formula $Li_xMPO_4$, wherein $0.05 \leq x \leq 1.2$ and M is one kind selected from Fe, Mn, Co, Ni, Cu, Zn, Mg, Cr, V, Mo, Ti, Al, Nb, B, and Ga. The manufacturing method of the positive electrode activator involves mixing a powder raw material, adding this powder raw material to and mixing with a dispersion medium containing a surfactant, carrying out evaporative removal of the above-mentioned dispersion medium, followed by calcination.

CN 1 775 665 A relates to a method for preparing a lithium iron phosphate ($LiFePO_4$) anode material for a Li-ion battery by solid phase reduction. The method involves mixing a Li-containing compound, a trivalent iron compound, a phosphorous compound an organic additive and an organic solvent, ball-milling the mixture, drying the mixture at 100-120 °C, baking it at 500-800 °C and ball-milling it.

**Summary of the Invention**

The object of the present invention is to overcome the disadvantages of the lithium iron phosphate prepared by conventional methods, such as large particle size and nonuniform particle size distribution of the lithium iron phosphate grains, and low initial discharge specific capacity, poor large-current discharge performance and poor cycle performance of the battery prepared from the lithium iron phosphate; and to provide a method for preparing lithium iron phosphate with small particle size and uniform particle size distribution, wherein the battery prepared from the lithium iron phosphate obtained by the present method has high initial discharge specific capacity, and good large-current discharge property and cycle performance.

The inventor found that the reason for the large particle size and nonuniform particle size distribution of the lithium iron phosphate prepared by conventional methods is that: (1) it is very difficult for each component to separate out during drying after lithium source, iron source, phosphorus source and carbon source are mixed in water, which leads to nonuniform distribution of each element in obtained precursor; (2) moreover, individual crystallization of each component during drying is prone to caking, which makes precursor particle size difficult to control, thus lithium iron phosphate prepared by the aforementioned method has large particle size, and nonuniform particle size distribution. Therefore, when the aforementioned lithium iron phosphate is used as positive electrode active material, the obtained battery has low initial discharge specific capacity, and poor large-current discharge performance and cycle performance.

The present invention provides a method for preparing $LiFePO_4$ as a positive electrode active material for a lithium ion secondary battery, comprising drying and sintering a mixture containing a lithium source, ferric source, phosphorus source, a carbon source, and a solvent, wherein the solvent is water and/or water soluble organic solvent, the ferric source is ferric oxide ($Fe_2O_3$), and the phosphorus source is phosphoric acid ($H_3PO_4$).

Compared with prior art, the method according to the present invention can obtain a precursor with small particle size and uniform particle size distribution by using ferric oxide as the iron source and phosphoric acid as the phosphorus source. The possible explanation for the result is assumed to be that (1) a complex is formed under the action of phosphoric acid when lithium source, ferric oxide, phosphoric acid, and carbon source are mixed in water and/or water soluble organic solvent, and in the solution, the complex can form a relatively stable sol-like material with elements uniformly distributed therein; (2) during drying, the components in sol-like matter adopt ferric oxide fine particle as core, and attach on the surface of the ferric oxide particle to regularly separate out, which thus avoids caking occurred in individual crystallization of each component of precursor, so as to obtain precursor with small particle size and uniform particle size distribution. The obtained lithium iron phosphate after sintering of the precursor has small particle size and uniform particle size distribution, and the battery prepared from the lithium iron phosphate has high initial discharge specific capacity, and significantly improved large-current discharge performance and cycle performance.

Brief Description of the Drawings

Fig. 1 is the XRD diffraction pattern of the lithium iron phosphate prepared by the method according to the present invention in example 1;
Fig. 2 is the SEM image of the lithium iron phosphate prepared by the method according to the present invention in example 1; and
Fig. 3 is the SEM image of the lithium iron phosphate prepared by the conventional method in comparison example 1.

Detailed Description of the Embodiments

The method provided in the present invention comprises drying and sintering a mixture containing a lithium source, ferric source, phosphorus source, a carbon source; and a solvent, wherein the solvent is water and/or water soluble organic solvent, the ferric source is ferric oxide($Fe_2O_3$), and the phosphorus source is phosphoric acid($H_3PO_4$).

The molar ratio of the lithium source, ferric oxide, and phosphoric acid is Li: Fe: P = 0.95-1.1: 1: 0.95-1.1; based on 100 weight parts of ferric oxide, the amount of the carbon source is 30-110 weight parts, and preferably 45-70 weight parts, and the amount of the solvent is 125-500 weight parts, and preferably 150-350 weight parts. The mixture containing a lithium source, ferric oxide, phosphoric acid, a carbon source, and a solvent may be prepared by mixing the lithium source, ferric oxide, phosphoric acid, and carbon source in the solvent, and the mixing condition is not specifically limited as long as it is able to ensure that all raw materials can fully contact and react, and each element in the precursor can be uniformly mixed. For example, the mixing time can be 0.5-6 hr, and the mixing temperature can be 5-60°C. There is no special restriction on mixing sequence of each raw material, for example, one or more of lithium source, ferric oxide, phosphoric acid, and carbon source can be added into the solvent, and then the rest materials are added; or lithium source, ferric oxide, phosphoric acid, and carbon source can be simultaneously added into the solvent. In the mixing process, stirring can be carried out, and the stirring speed can be 100-3,000 rpm.

The lithium source can be any lithium-containing compound capable of providing lithium element for the reaction while not bringing impurities into the product, which can be one or more selected from lithium hydroxide, lithium hydroxide monohydrate, lithium carbonate, lithium phosphate, lithium phosphate dodecahydrate, lithium oxalate, and lithium acetate, and preferably lithium hydroxide monohydrate.

Ferric oxide is insoluble in the solvent (water and/or water soluble solvent) and unreactive with phosphoric acid, therefore it acts as core to be attached by other components separated out during the precursor formation process. The smaller and more uniform the ferric oxide particle size is, the smaller and more uniform the formed precursor is, which is more beneficial for preparing lithium iron phosphate with small particle size and uniform particle size distribution. Therefore, ferric oxide preferably has median particle size $D_{50}$ no more than 0.7 micron and $D_{95}$ no more than 5.0 micron, and more preferably $D_{50}$ within 0.2-0.6 micron, and $D_{95}$ within 1.5-4.5 micron, wherein $D_{50}$ represents sample average particle size, i.e. the tested sample has 50% of particles with particle size smaller than that value, and 50% of particles with particle size larger than that value; $D_{95}$ means that the tested sample has 95% of particles with particle size smaller than that value, and 5% of particles with particle size larger than that value.

Ferric oxide and phosphoric acid both are regular chemical materials, with mature production process and low cost.

The carbon source can be various conventional carbon sources used in lithium iron phosphate preparation process, such as one or more selected from terpolymer of benzene, naphthalene, and phenanthrene, binary copolymer of benzene and phenanthrene, binary copolymer of benzene and anthracene, soluble starch, polyvinyl alcohol, sucrose, glucose, fructose, lactose, maltose, phenolic resin, furfural resin, artificial graphite, natural graphite, acetylene black, carbon black, and mesocarbon microbeads, and among them, one or more selected from sucrose, glucose, fructose, lactose, and maltose is preferred. The carbon source has two functions: (1) a part of the carbon source reduces ferric ions into ferrous ions during sintering process; and (2) the other part of the carbon source dopes carbon element into the lithium iron phosphate.

The solvent can be water and/or water soluble organic solvent, and preferably water. The water soluble organic solvent can be water soluble organic solvent with boiling point less than 200 °C, preferably one or more of methanol, ethanol and propanol. Preferably, the mixture may further contain nitrate of metal M selected from the group consisting of Mn, Co, Ni, Ca, Mg, Zn, Ti, Nb, Y, Mo, Cu, Au, Ga, Zr, V and Al. The M is called dopant element, which can increase ion conductivity of lithium iron phosphate so as to improve large-current charge-discharge performance of the battery using lithium iron phosphate as positive electrode active material. The molar ratio of M to Fe is 0.005-0.25 : 1, and preferably 0.01-0.1 :1 .

The mixture may preferably further contain a halogen compound selected from the group consisting of lithium fluoride, lithium chloride, lithium bromide, and lithium iodide, with which the battery has higher capacity and improved large-current discharge performance. Preferably, the halogen compound has $D_{95}$ no more than 3 micron, and more preferably 0.3-3 micron. According to this preferred embodiment, the prepared positive electrode active material has smaller particle size and more uniform particle size distribution, and the battery prepared by the positive electrode active material has higher mass specific capacity and improved large-current discharge performance. The molar ratio of halogen in the halogen compound to iron may be 0.005-0.25:1, and preferably 0.01-0.1:1.

The drying can be carried out by various drying methods used in the technical field, preferably baking. The baking temperature can be 80-160°C, and preferably 100-120°C, and the baking time is 5-40 hr, and preferably 8-24 hr.

The sintering can be one-stage sintering or two-stage sintering under protection of inert gas atmosphere. The one-stage sintering preferably comprises heating to 600-800°C at a rate of 1-10°C/min, and keeping the temperature for 6-20 hr. The two-stage sintering preferably comprises heating to 300-500°C at a rate of 1-10°C/min and keeping the temperature for 5-8 hr at the first stage; and heating to 600-800°C at a rate of 1-10°C/min and keeping the temperature for 8-20 hr at the second stage.

The inert atmosphere refers to any one or more gases unreactive with the reactant and the product, such as one or more of nitrogen gas and Group 0 gases in the element period table.

The present invention will be described in further details by way of examples as below.

Example 1

This example describes the method provided in the present invention for preparing lithium iron phosphate positive electrode active material.

43.3 g of $LiOH \cdot H_2O$ (Shanghai China-Lithium Industrial Co., Ltd., battery grade, containing 97.01 wt% of $LiOH \cdot H_2O$), 80.4 g of $Fe_2O_3$ with median particle size $D_{50}$ of 0.37 micron and $D_{95}$ of 2.50 micron (ELEMENTIS, containing

99.3% of $Fe_2O_3$), 115.0 g of $H_3PO_4$ (Guangzhou Guanghua Chemical Reagent Co. Ltd., analytical grade, containing 85.2% of $H_3PO_4$), 38.2g of sucrose (Guangzhou Guanghua Chemical reagent Co. Ltd., analytical grade), and 200ml of dionizied water were introduced into a reactor, stirred at 200 rpm for 1.5 hr, and dried at 120°C for 8 hr to obtain a precursor. The precursor was heated to 690°C at a rate of 5°C/min, sintered at 690°C in nitrogen atmosphere for 8 hr, and then naturally cooled to room temperature to obtain the inventive lithium iron phosphate positive electrode active material.

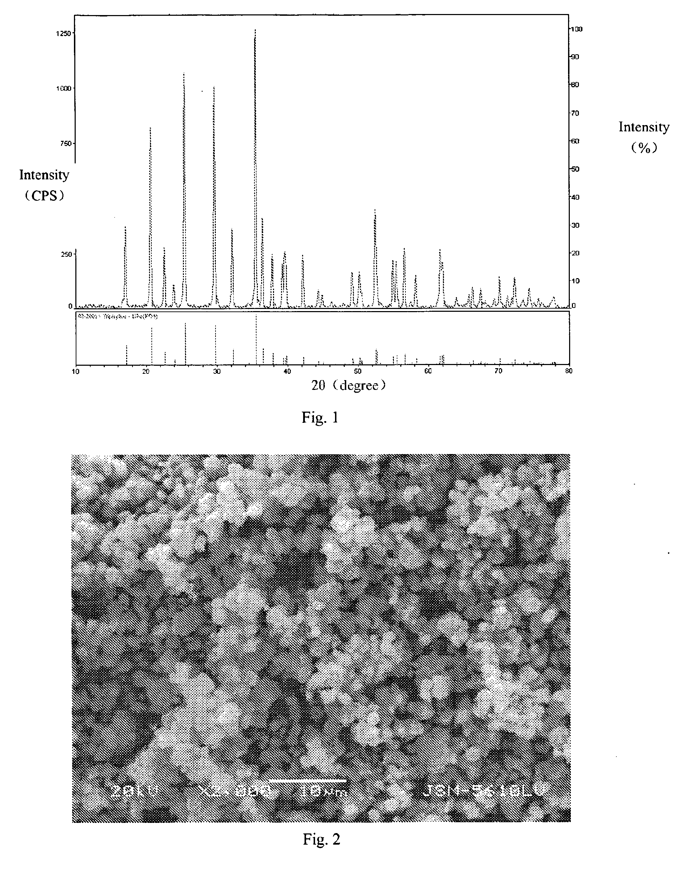

X-ray powder diffractometer (Rigaku Corporation, D/MAX2200PC) was adopted to analyze LiFePO4/C positive electrode material to give XRD pattern as shown in Fig. 1. Scanning electronic microscope (JOEL, JSM-5610LV) was adopted to analyze the sample to give SEM image as shown in Fig. 2. It can be observed from the XRD pattern that the lithium iron phosphate exhibits good crystallization without any impurity peak. It can be observed from the SEM image that the particle size distribution is uniform.

Examples 2-6

Lithium iron phosphate positive electrode active material was prepared according to the method in the example 1, in which kind and amount of lithium source, amount and particle size of ferric oxide, amount of phosphoric acid, kind and amount of carbon source, kind and amount of solvent, drying temperature and time, and sintering temperature and time were shown in Table 1.

Table 1

|  | Example 2 | Example 3 | Example 4 | Example 5 | Example 6 |
|---|---|---|---|---|---|
| Lithium source | $LiOH \cdot H_2O$ | $LiOH \cdot H_2O$ | $Li_2CO_3$ | $Li_2CO_3$ | $Li_2CO_3$ |
| Amount of lithium source (g) | 42 | 45 | 39 | 39 | 38 |
| Amount of ferric oxide (g) | 80 | 85 | 80 | 80 | 80 |
| Ferric oxide particle size $D_{50}$ (micron) | 0.42 | 0.66 | 0.31 | 0.37 | 0.50 |
| Ferric oxide particle size $D_{95}$ (micron) | 2.53 | 4.89 | 1.97 | 2.50 | 3.64 |
| Amount of phosphoric acid (g) | 115 | 118 | 115 | 114 | 115 |
| Carbon source | Sucrose | sucrose | glucose | fructose | fructose |
| Amount of carbon source (g) | 47 | 56 | 40 | 50 | 60 |
| Solvent | 230ml water | Mixed solvent of 120ml water and 120ml ethanol | 190ml ethanol | 200ml water | 210ml ethanol |
| Drying temperature (°C) | 80 | 100 | 120 | 140 | 160 |
| Drying time (hr) | 40 | 30 | 20 | 12 | 5 |
| Sintering temperature(°C) | 600 | 630 | 700 | 750 | 800 |
| Sintering time (hr) | 5 | 10 | 12 | 18 | 15 |

Example 7

43.3 g of $LiOH \cdot H_2O$ (Shanghai China-Lithium Industrial Co., Ltd., battery grade, containing 97.01 wt% of Li-$OH \cdot H_2O$), 80.4 g of $Fe_2O_3$ with median particle size $D_{50}$ of 0.37 micron and $D_{95}$ of 2.5 micron (ELEMENTIS, containing 99.3% of $Fe_2O_3$), 115.0 g of $H_3PO_4$ (Guangzhou Guanghua Chemical reagent Co. Ltd., analytical grade, containing 85.2% of $H_3PO_4$), 38.2 g of sucrose (Guangzhou Guanghua Chemical reagent Co. Ltd., analytical grade), 2.45 g (0.01mol)

of Ni(NO$_3$)$_3$, 1.89g (0.01mol) of Zn(NO$_3$)$_2$, and 200ml of dionizied water were introduced into a reactor, stirred at 200 rpm for 1.5 hr, and dried at 120°C for 8 hr to obtain a precursor. In nitrogen atmosphere, the precursor was heated to 500°C at 2°C/min, and sintered at 500°C for 4 hr, and then heated to 700°C at 2°C/min, and sintered at 700°C for 10 hr. The sintering product was naturally cooled to room temperature to obtain the lithium iron phosphate positive electrode active material provided in the present invention.

Example 8

Lithium iron phosphate positive electrode active material was prepared according to the method in the example 7, except that 2.45g(0.01mol) of Ni(NO$_3$)$_3$ and 1.89g(0.01mol) of Zn(NO$_3$)$_2$ were replaced by 17.76g(0.06mol) Ti(NO$_3$)$_4$.

Example 9

Lithium iron phosphate positive electrode active material was prepared according to the method in the example 7, except that 2.45g(0.01mol) of Ni(NO$_3$)$_3$ and 1.89g(0.01mol) of Zn(NO$_3$)$_2$ were replaced by 5.92g(0.04mol) of Mg(NO$_3$)$_2$, and LiCl was further added at the amount of 0.85g(0.02mol).

Example 10

Lithium iron phosphate positive electrode active material was prepared according to the method in the example 1, except that 1.56g (0.06mol) of LiF was further added during mixing the raw materials.

Comparison Example 1

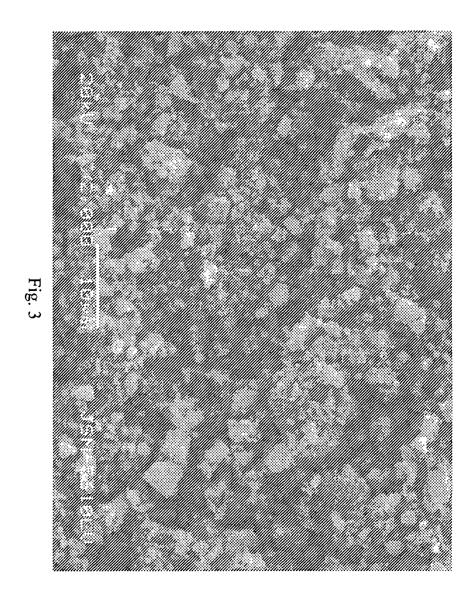

The comparison example describes the conventional method for preparing lithium iron phosphate positive electrode active material disclosed in the example 1 of CN 1442917A.
2ml of glycerol was dropwise added into 10ml of deionized water, and stirred well. 3.45g of LiNO$_3$, 9g of FeC$_2$O$_4$·9H$_2$O and 5.8g of NH$_4$H$_2$PO$_4$ were added thereto while high speed stirring, stirred for 1 hr, dried at 120°C in N$_2$ atmosphere. After elevating the temperature to 600°C in N$_2$ atmosphere, the dried product was baked for 24 hr, and then naturally cooled. Scanning electronic microscope (JOEL, JSM-5610LV) was adopted to analyze the sample to give SEM image as shown in Fig. 3. By comparing Fig. 2 and Fig. 3, lithium iron phosphate prepared in the comparison example 1 has less uniform particle size distribution than that in the example 1.

Comparison Example 2

The comparison example explains the conventional method for preparing lithium iron phosphate positive electrode active material disclosed in the example 3 of CN 1821062A, comprising steps as below:

(1) Weighing ferric phosphate, lithium acetate, and urea at ferric phosphate/lithium acetate molar ratio of 1:1 and ferric phosphate/urea molar ratio of 1:3, adding distilled water to dissolve lithium acetate and urea, stirring at 80°C for 6 hr, and evaporating to dryness to give lithium iron phosphate precursor;
(2) Treating the precursor at 700°C for 3 hr under protection of gas mixture containing argon gas and 5 vol% of hydrogen gas to give lithium iron phosphate; and
(3) Weighing lithium iron phosphate and sucrose at weight ratio of 92:8, dissolving sucrose in distilled water, heating while stirring, evaporating to dryness, treating at 650°C for 2 hr to give carbon-coated lithium iron phosphate.

Performance Test

(1) Particle size distribution test

MASTERSIZER X100 laser particle size analyzer (HONEYWELL, US) was adopted to respectively measure particle sizes of lithium iron phosphate grains prepared in the examples 1-10 and the comparison example 1, and the measurement result was shown in Table 2.

Table 2

|  | $D_{10}$ (micron) | $D_{50}$ (micron) | $D_{90}$ (micron) |
|---|---|---|---|
| Example 1 | 0.91 | 3.84 | 7.10 |
| Example 2 | 0.79 | 3.01 | 6.49 |
| Example 3 | 0.97 | 4.27 | 7.92 |
| Example 4 | 0.75 | 2.34 | 6.01 |
| Example 5 | 0.88 | 3.53 | 7.53 |
| Example 6 | 0.94 | 3.74 | 7.71 |
| Example 7 | 0.90 | 3.82 | 7.09 |
| Example 8 | 0.91 | 3.85 | 7.12 |
| Example 9 | 0.84 | 3.62 | 6.70 |
| Example 10 | 0.82 | 3.58 | 6.65 |
| Comparison Example 1 | 2.55 | 8.55 | 19.35 |

In the above table, $D_{50}$ represents sample average particle size, i.e., the tested sample has 50% particles with particle size smaller than that value, and 50% particles with particle size larger than that value; $D_{10}$ means that the tested sample has 10% particles with particle size smaller than that value, and 90% particles with particle size larger than that value; $D_{90}$ means that the tested sample has 90% particles with particle size smaller than that value, and 10% particles with particle size larger than that value. Therefore, the bigger the difference between $D_{50}$ and $D_{10}$ and the difference between $D_{50}$ and $D_{90}$ are, the less uniform the particle size distribution is. It could be seen from the Table 2 that, the difference between $D_{50}$ and $D_{10}$ and the difference between $D_{50}$ and $D_{90}$ of grains prepared in the examples 1-10 are not more than 4.0 micron, while the difference between $D_{50}$ and $D_{10}$ and the difference between $D_{50}$ and $D_{90}$ of the grains prepared in the comparison example 1 are respectively 6.0 micron and 10.8 micron, indicating that lithium iron phosphate prepared by the inventive method has uniform particle size distribution and uniform particle size.

Moreover, from data in Table 2, compared with the lithium iron phosphate prepared by the comparison example method, the lithium iron phosphate grains prepared by the present invention have smaller particle size.

(2) Battery preparation

Positive electrode preparation

90g of LiFePO4 positive electrode active material prepared by the examples 1-10 and the comparison examples 1 and 2 respectively, 5g of poly(vinylidene difluoride) (PVDF) binder, and 5g of acetylene black conductive agent were added into 50g of N-methylpyrrolidone, and stirred in a vacuum mixer to form uniform positive electrode slurry. The slurry was uniformly coated on both sides of 20 micron-thick aluminum foil, dried at 150°C, rolled, and cut into 540mmx43.5mm positive electrode containing 5.3g $LiFePO_4$ as active component.

Cathode Preparation

90g of natural graphite as cathode active component, 5g of PVDF binder, and 5g of carbon black conductive agent were added into 100g of N-methylpyrrolidone, and stirred in a vacuum mixer to form uniform negative electrode slurry. The slurry was uniformly coated on both sides of 12 micron-thick copper foil, dried at 90°C, rolled, and cut into 500mmx44mm negative electrode containing 3.8g of natural graphite as active component.

Battery Assembly

The above-mentioned positive electrode, cathode, and polypropylene membrane were respectively into a square lithium ion battery core. 1M $LiPF_6$ was dissolved in a mixed solvent of EC/EMC/DEC (1: 1:1) to form a non aqueous electrolyte. The electrolyte was injected into a battery aluminum casing at 3.8g/Ah, and the casing was sealed to prepare lithium ion secondary batteries A1-A10 in the present invention, and lithium ion secondary batteries AC1 and AC2 in the comparison examples, respectively.

(3) Battery initial discharge specific capacity test

The test comprises respectively charging the batteries A1-A10, AC1 and AC2 at constant current of 0.2C with charging upper limitation set at 4.2V, setting aside for 20 min, discharging from 4.2V to 2.5V at constant current of 0.2C, recording the initial discharging capacity, and calculating the battery mass specific capacity according to equation as below:

$$\text{Mass specific capacity} = \text{battery initial discharge capacity (mAh)/positive electrode material weight (g)}$$

The result is shown in Table 3.

Table 3

| Example No. | Battery No. | Battery initial discharge capacity (mAh) | Mass specific capacity(mAh/g) |
|---|---|---|---|
| Example 1 | A1 | 792.7 | 149.6 |
| Example 2 | A2 | 757.2 | 142.9 |
| Example 3 | A3 | 749.1 | 141.3 |
| Example 4 | A4 | 801.4 | 151.2 |
| Example 5 | A5 | 780.4 | 147.2 |
| Example 6 | A6 | 764.0 | 144.2 |
| Example 7 | A7 | 810.2 | 152.9 |
| Example 8 | A8 | 812.4 | 153.3 |
| Example 9 | A9 | 816.9 | 154.1 |
| Example 10 | A10 | 812.7 | 153.3 |
| Comparison example 1 | AC1 | 650.4 | 122.7 |

From the data in Table 3, it can be observed the battery AC1 prepared from the lithium iron phosphate by the method in the comparison example 1 has undesirable initial discharge capacity and mass specific capacity, while the battery A1-A10 prepared from the lithium iron phosphate by the present invention has significantly improved initial discharge capacity and mass specific capacity.

(4) Large-current discharge performance test

The batteries A1-A10, AC1, and AC2 are respectively subjected to large-current discharge test at normal temperature and relative humidity of 25-85%. The test method comprises: adopting BS-9300(R) secondary battery performance test device to charge the battery to be tested to 3.8V at current of 0.2C, setting aside for 5min, discharging to 2.0V at current of 1C, setting aside for 5min, charging to 3.8V at constant current of 0.2C, and charging at constant voltage of 3.8V with cutoff current of 0.02C; respectively discharging the charged battery at 0.2C, 1C, and 3C to battery voltage of 2.0V, and recording the discharge capacity.

$$\text{Discharge capacity (mAh)} = \text{discharge current (mA)} \times \text{discharge time (hr)}$$

$$\text{Discharge rate} = 1C \text{ or } 3C \text{ discharge capacity/0.2C discharge capacity} \times 100\%$$

The result is shown in Table 4

Table 4

| Example No. | Battery No. | 1 C/0.2 C Discharge ratio (%) | 3 C/0.2 C Discharge ratio (%) |
|---|---|---|---|
| Example 1 | A1 | 95.3 | 92.4 |
| Example 2 | A2 | 94.8 | 91.7 |
| Example 3 | A3 | 94.3 | 91.4 |
| Example 4 | A4 | 96.4 | 92.6 |
| Example 5 | A5 | 94.9 | 92.2 |
| Example 6 | A6 | 95.0 | 92.1 |
| Example 7 | A7 | 95.9 | 92.6 |
| Example 8 | A8 | 96.1 | 92.9 |
| Example 9 | A9 | 96.5 | 93.1 |
| Example 10 | A10 | 96.2 | 93.0 |
| Comparison example 1 | AC1 | 74.0 | 50.3 |
| Comparison example 2 | AC2 | 79.1 | 68.6 |

According to the data in Table 4, the batteries AC1 and AC2 show undesirable large-current discharge performance, while the batteries A1-A10 have significantly improved large-current discharge performance.

(5) Cycle performance test

The batteries A1-A10, AC1, and AC2 are respectively subjected to cycle performance test at normal temperature and relative humidity of 25-85%. The test method comprises steps as below:

Firstly, adopting BS-9300(R) secondary battery performance test device to charge the battery to be tested to 3.8V at current of 0.2C, setting aside for 5min, discharging to 2.5V at current of 1C, setting aside for 5min, and charging to 4.2V at constant current of 0.2C with charge cutoff current at 20mA; discharging at 200mA to 2.5V, and measuring the discharge initial capacity of the battery; repeating charge-discharge cycle of charging to 4.2V at constant current of 0.2C and discharging to 2.5V at 0.2C, recording the thirtieth cycle end capacity, and calculating the battery capacity residual rate according to equation as below:

$$\text{Capacity residual rate} = \text{the thirtieth cycle end capacity/initial capacity} \times 100\%$$

The test result is shown in Table 5.

Table 5

| Example No. | Battery No. | Capacity residual ratio after 30 cycles |
|---|---|---|
| Example 1 | A1 | 98.62 |
| Example 2 | A2 | 98.15 |
| Example 3 | A3 | 97.96 |
| Example 4 | A4 | 98.91 |
| Example 5 | A5 | 98.44 |
| Example 6 | A6 | 97.87 |
| Example 7 | A7 | 98.97 |
| Example 8 | A8 | 99.01 |
| Example 9 | A9 | 99.13 |

(continued)

| Example No. | Battery No. | Capacity residual ratio after 30 cycles |
|---|---|---|
| Example 10 | A10 | 99.04 |
| Comparison example 1 | AC1 | 91.53 |
| Comparison example 2 | AC2 | 92.15 |

According to the data in Table 5, compared with the batteries prepared from lithium iron phosphate obtained by the method in prior arts, the batteries prepared by the present invention have significantly improved cycle performance.

**Claims**

1. A method for preparing lithium iron phosphate as an positive electrode active material for a lithium ion secondary battery, comprising drying and sintering a mixture containing a lithium source, ferric source, phosphorus source, a carbon source, and a solvent, wherein the solvent is water and/or water soluble organic solvent, the ferric source is ferric oxide, and the phosphorus source is phosphoric acid.

2. The method according to claim 1, wherein the molar ratio of the lithium source, ferric oxide, and phosphoric acid is Li: Fe: P = 0.95-1.1: 1: 0.95-1.1; and relative to 100 weight parts of ferric oxide, the amount of the carbon source is 30-110 weight parts, and the amount of the solvent is 125-500 weight parts.

3. The method according to claim 1, wherein the ferric oxide has $D_{50}$ no more than 0.7 micron and $D_{95}$ no more than 5.0 micron.

4. The method according to claim 3, wherein the ferric oxide has $D_{50}$ within 0.2-0.6 micron and $D_{95}$ within 1.5-4.5 micron.

5. The method according to claim 1 or 2, wherein the lithium source can be one or more selected from lithium hydroxide, lithium hydroxide monohydrate, lithium carbonate, lithium phosphate, lithium phosphate dodecahydrate, lithium oxalate, and lithium acetate; the carbon source is one or more selected from sucrose, glucose, fructose, lactose, and maltose; and the water soluble organic solvent is one or more selected from methanol, ethanol, and propanol.

6. The method according to claim 1, wherein the mixture further contains nitrate of metal M; the M is one or more selected from Mn, Co, Ni, Ca, Mg, Zn, Ti, Nb, Y, Mo, Cu, Au, Ga, Zr, V and Al; and the molar ratio of M to Fe is 0.005-0.25 : 1.

7. The method according to claim 1 or 6, wherein the mixture further contains a halogen compound; the halogen compound is one or more selected from lithium fluoride, lithium chloride, lithium bromide, and lithium iodide; and the molar ratio of halogen in the halogen compound to iron is 0.005-0.25 : 1.

8. The method according to claim 1, wherein the drying is carried out at a temperature of 80-160°C for 2-40 hr.

9. The method according to claim 1, wherein the sintering comprises the steps of: in an inert atmosphere, heating to 600-800°C at rate of 1-10°C/min, and holding at this temperature for 6-20 hr.

10. The method according to claim 1, wherein the sintering comprises the steps of: in an inert atmosphere, heating to 300-500°C at rate of 1-10°C/min and holding at this temperature for 5-8 hr, and then heating to 600-800°C at rate of 1-10°C/min and holding at this temperature for 8-20 hr.

**Patentansprüche**

1. Verfahren zur Herstellung von Lithiumeisenphosphat als Aktivmaterial einer positiven Elektrode für eine Lithiumionen-Sekundärbatterie, das das Trocknen und Sintern einer Mischung umfasst, die eine Lithiumquelle, eine Eisen (III)-Quelle, eine Phosphorquelle, eine Kohlenstoffquelle und ein Lösungsmittel enthält, worin das Lösungsmittel Wasser und/oder ein wasserlösliches organisches Lösungsmittel ist, die Eisen (III)-Quelle Eisen (III)-Oxid ist und die Phosphorquelle Phosphorsäure ist.

2. Verfahren gemäß Anspruch 1, worin das molare Verhältnis der Lithiumquelle, des Eisen (III)-Oxids und der Phosphorsäure Li: Fe: P= 0,95-1,1: 1: 0,95-1,1 ist; und in Bezug auf 100 Gew.-Teile an Eisen (III)-Oxid die Menge der Kohlenstoffquelle 30 bis 110 Gew.-Teile und die Menge des Lösungsmittels 125 bis 500 Gew.-Teile ist.

3. Verfahren gemäß Anspruch 1, worin das Eisen (III)-Oxid ein $D_{50}$ von nicht mehr als 0,7 Mikron und ein $D_{95}$ von nicht mehr als 5,0 Mikron hat.

4. Verfahren gemäß Anspruch 3, worin das Eisen (III)-Oxid ein $D_{50}$ innerhalb von 0,2 bis 0,6 Mikron und ein $D_{95}$ innerhalb von 1,5 bis 4,5 Mikron hat.

5. Verfahren gemäß Anspruch 1 oder 2, worin die Lithiumquelle ein oder mehrere ausgewählt aus Lithiumhydroxid, Lithiumhydroxidmonohydrat, Lithiumcarbonat, Lithiumphosphat, Lithiumphosphatdodecahydrat, Lithiumoxalat und Lithiumacetat sein können; die Kohlenstoffquelle eines oder mehrere ausgewählt aus Saccharose, Glukose, Fruktose, Laktose und Maltose ist; und das wasserlösliche organische Lösungsmittel eines oder mehrere ausgewählt aus Methanol, Ethanol und Propanol ist.

6. Verfahren gemäß Anspruch 1, worin die Mischung weiterhin ein Nitrat des Metalls M enthält; das M ist ein oder mehrere ausgewählt aus Mn, Co, Ni, Ca, Mg, Zn, Ti, Nb, Y, Mo, Cu, Au, Ga, Zr, V und Al; und das molare Verhältnis von M zu Fe ist 0,005 bis 0,25 : 1.

7. Verfahren gemäß Anspruch 1 oder 6, worin die Mischung weiterhin eine Halogenverbindung enthält; die Halogenverbindung ist eine oder mehrere ausgewählt aus Lithiumfluorid, Lithiumchlorid, Lithiumbromid und Lithiumjodid; und das Molverhältnis von Halogen in der Halogenverbindung zu Eisen ist 0,005 bis 0,25 : 1.

8. Verfahren gemäß Anspruch 1, worin das Trocknen bei einer Temperatur von 80 bis 160°C über 2 bis 40 Stunden durchgeführt wird.

9. Verfahren gemäß Anspruch 1, worin das Sintern die Schritte umfasst: Erwärmen in einer inerten Atmosphäre auf 600 bis 800°C bei einer Rate von 1 bis 10°C/Minute und Halten bei dieser Temperatur über 6 bis 20 Stunden.

10. Verfahren gemäß Anspruch 1, worin das Sintern die Schritte umfasst: Erwärmen in einer inerten Atmosphäre auf 300 bis 500°C bei einer Rate von 1 bis 10°C/Minute und Halten bei dieser Temperatur über 5 bis 8 Stunden, und dann Erwärmen auf 600 bis 800°C bei einer Rate von 1 bis 10°C/Minute und Halten bei dieser Temperatur für 8 bis 20 Stunden.

**Revendications**

1. Procédé de préparation de phosphate de lithium et de fer en tant que matériau actif d'électrode positive pour une batterie secondaire au lithium-ion, comprenant le fait de sécher et de fritter un mélange contenant une source de lithium, une source de fer, une source de phosphore, une source de carbone, et un solvant, où le solvant est de l'eau et/ou un solvant organique hydrosoluble, la source de fer est l'oxyde de fer, et la source de phosphore est l'acide phosphorique.

2. Procédé selon la revendication 1, dans lequel le rapport molaire de la source de lithium, de l'oxyde de fer, et de l'acide phosphorique est Li: Fe: P = 0,95-1,1: 1: 0,95-1,1 ; et par rapport à 100 parties en poids d'oxyde de fer, la quantité de la source de carbone est de 30-110 parties en poids, et la quantité du solvant est de 125-500 parties en poids.

3. Procédé selon la revendication 1, dans lequel l'oxyde de fer présente un D50 ne dépassant pas 0,7 micron et un D95 ne dépassant pas 5,0 micron.

4. Procédé selon la revendication 3, dans lequel l'oxyde de fer présente un D50 dans la plage de 0,2-0,6 micron et un D95 dans la plage de 1,5-4,5 micron.

5. Procédé selon la revendication 1 ou 2, dans lequel la source de lithium peut être un ou plusieurs éléments choisi(s) parmi l'hydroxyde de lithium, le monohydrate d'hydroxyde de lithium, le carbonate de lithium, le phosphate de lithium, le dodécahydrate de phosphate de lithium, l'oxalate de lithium, et l'acétate de lithium ; la source de carbone est un ou plusieurs éléments choisi(s) parmi le saccharose, le glucose, le fructose, le lactose, et le maltose ; et le solvant organique hydrosoluble est un ou plusieurs éléments choisi(s) parmi le méthanol, l'éthanol, et le propanol.

6. Procédé selon la revendication 1, dans lequel le mélange contient en outre un nitrate de métal M ; le M est un ou plusieurs éléments choisi(s) parmi Mn, Co, Ni, Ca, Mg, Zn, Ti, Nb, Y, Mo, Cu, Au, Ga, Zr, V et Al ; et le rapport molaire de M sur Fe est de 0,005-0,25 : 1.

7. Procédé selon la revendication 1 ou 6, dans lequel le mélange contient en outre un composé halogéné ; le composé halogéné est un ou plusieurs éléments choisi(s) parmi le fluorure de lithium, le chlorure de lithium, le bromure de lithium, et l'iodure de lithium ; et le rapport molaire de l'halogène dans le composé halogéné sur le fer est de 0,005-0,25 : 1.

8. Procédé selon la revendication 1, dans lequel le séchage est effectué à une température de 80-160°C pendant 2-40 h.

9. Procédé selon la revendication 1, dans lequel le frittage comprend les étapes consistant : à effectuer un chauffage, dans une atmosphère inerte, jusqu'à 600-800°C à une vitesse de 1-10°C/min, et à le maintenir à cette température pendant 6-20 h.

10. Procédé selon la revendication 1, dans lequel le frittage comprend les étapes consistant : à effectuer un chauffage, dans une atmosphère inerte, jusqu'à 300-500°C à une vitesse de 1-10°C/min et à le maintenir à cette température pendant 5-8 h, et puis à effectuer un chauffage jusqu'à 600-800°C à une vitesse de 1-10°C/min et à le maintenir à cette température pendant 8-20 h.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1442917 A
- CN 1821062 A
- WO 2005051840 A1
- JP 2004079276 A
- CN 1775665 A